# EUROPÄISCHE PATENTANMELDUNG

(11) **EP 1 679 049 A1**
(43) Veröffentlichungstag der Anmeldung: **12.07.2006**
(21) Anmeldenummer: 06000053.6
(22) Anmeldetag: 03.01.2006
(51) Int. Cl.: A61C 8/00

(54) **Dentalimplantat zur Aufnahme und Fixierung eines Zahnersatzes**

(30) Priorität: 07.01.2005 DE 202005000208 U
(71) Anmelder: Lippe, Rainer, 34134 Kassel (DE)
(72) Erfinder: Lippe, Rainer, 34134 Kassel (DE)
(74) Vertreter: WALTHER, WALTHER & HINZ Patentanwälte - European Patent Attorneys

(57) **Zusammenfassung**

Gegenstand der Erfindung ist ein in einen menschlichen Kiefer einschraubbares Dentalimplantat zur Aufnahme und zur Fixierung eines Zahnersatzes, umfassend einen Grundkörper (10) mit einem Außengewinde (26) zur Verankerung des Grundkörpers (10) im Kiefer, einen Pfosten (12) zur Aufnahme des Zahnersatzes und eine Fixierschraube (14) zur Befestigung des Pfostens (12) am Grundkörper (10), wobei im Grundkörper (10) eine axiale Sacklochöffnung (16) vorgesehen ist, die in ihrem unteren Bereich ein Innengewinde (18) und in ihrem oberen Bereich eine Pfostenaufnahme aufweist, wobei am Pfosten (12) ein zur Pfostenaufnahme passgenau kompatibler Einsatz ausgebildet ist und wobei der Pfosten (12) hohl ausgeführt ist, so dass die Fixierschraube (14) durch den Pfosten (12) hindurchführbar ist und in das Innengewinde (18) der Sacklochöffnung (16) einschraubbar ist, um den Pfosten (12) am Grundkörper (10) zu fixieren. Ein Dentalimplantat zu schaffen, welches zuverlässig im Kiefer verankert ist und welches einfach zu implantieren ist, wird dadurch erreicht, dass die Pfostenaufnahme einen unteren, zylindrischen Abschnitt (20) und einen oberen, im Querschnitt achteckigen Abschnitt (22) aufweist, und dass der am Pfosten (12) ausgebildete Einsatz dazu passgenau kompatibel als Zylinder (28) und als Achteck (30) ausgebildet ist.

## Beschreibung

Die vorliegende Erfindung betrifft ein in einen menschlichen Kiefer einschraubbares Dentalimplantat zur Aufnahme und Fixierung eines Zahnersatzes gemäß dem Oberbegriff des Anspruches 1.

Aus der DE 102 31 743 A1 ist ein Dentalimplantat zur Implantation im Kiefer bekannt, welches koaxial zur Längsachse eine Bohrung aufweist. Im unteren Ende dieser Bohrung ist ein Gewinde ausgebildet, während der darüber liegende Teil der Bohrung im Wesentlichen zylindrisch ausgeführt ist. Am oberen Rand der Bohrung ist eine 30°-Phase vorgesehen, an die sich ein Innensechskant anschließt. Über diese Bohrung nimmt das Dentalimplantat einen hier nicht näher dargestellten Pfosten zur Aufnahme des eigentlichen Zahnersatzes auf. Dabei wird der Pfosten mittels einer Schraube am Zentralimplantat fixiert, wobei die Schraube in das Gewinde im unteren Bereich der Bohrung eingreift.

Um einen wackelfreien und zuverlässigen Sitz des Pfostens im eigentlichen Dentalimplantat zu erreichen, greift der Pfosten mit einem zylindrischen Abschnitt passgenau in die Bohrung ein, während ein als Sechskant ausgeführter Abschnitt in einen in der Bohrung ausgebildeten Innensechskant eingreift. Dabei verhindert der Sechskant/Innensechskant ein unbeabsichtigtes Verdrehen des Pfosten. Dies hat zur Folge, dass der die Verdrehsicherheit herstellende Innensechskant so dimensioniert sein muss, dass der zylindrische Abschnitt des Pfosten hier ungehindert hindurch kann. Folglich hat der Innensechskant an seiner schmalsten Stelle maximal die lichte Weite des Durchmessers des zylindrischen Abschnittes des Pfostens, wobei der maximale Durchmesser des Innensechskantes entsprechend größer ausgebildet ist. Gleichzeitig soll das Dentalimplantat so klein wie möglich ausgeführt werden, um zuverlässig im Kiefer verankert werden zu können.

In der Praxis hat sich nun herausgestellt, dass die verbleibende Wandung im Bereich des maximalen Durchmessers des Innensechskantes zu dünn ausgeführt ist bzw. dass für eine ausreichende Restwandstärke ein entsprechend groß dimensioniertes Dentalimplantat vorgesehen sein muss.

Davon ausgehend liegt der vorliegenden Erfindung die Aufgabe zu Grunde, ein Dentalimplantat der eingangs genannten Art zu schaffen, welches die vorgenannten Probleme löst.

Als technische Lösung dieser Aufgabe wird erfindungsgemäß vorgeschlagen, dass zuvor genannte Dentalimplantat gemäß den Merkmalen des Kennzeichens des Anspruches 1 fortzubilden. Vorteilhafte Weiterbildungen dieses Dentalimplantates sind den Unteransprüchen zu entnehmen.

Ein nach dieser technischen Lehre ausgebildetes Dentalimplantat hat den Vorteil, dass der Pfosten mit seinem Zylinder und seinem Achteck passgenau in die Sacklochöffnung der Pfostenaufnahme hinein passt. Die Ausbildung der Verdrehsicherung als Achteck hat dabei den großen Vorteil, dass der maximale Innendurchmesser des Achteckes sehr viel kleiner als ein vergleichbarer maximaler Durchmesser eines Sechsekkes ist, so dass bei gleichem Außendurchmesser die hier verbleibende Restwandstärke deutlich größer ist mit der Folge, dass bei dem erfindungsgemäßen Dentalimplantat der Pfosten zuverlässig und dauerhaft in der Pfostenaufnahme gehalten werden kann.

In einer bevorzugten Ausführungsform ist im Inneren des Pfosten ein umlaufender und konisch ausgebildeter Absatz vorgesehen, an dem Fixierschraube im montierten Zustand mit einer korrespondierenden Anlagefläche zur Anlage kommt. Hierdurch wird sichergestellt, dass die Fixierschraube großflächig gemäß dem Pfosten in Kontakt tritt und somit den Pfosten wackelfrei und dauerhaft am Grundelement fixieren kann. Ein weiterer Vorteil des konisch ausgebildeten Absatzes besteht darin, dass sich die Schraube hierdurch tief in den Pfosten hineinziehen kann, um somit mit der Anlagefläche großflächig anzuliegen und die entstehende Haltekraft ebenfalls großflächig ableiten kann. Durch dieses Verkeilen der Fixierschraube im Pfosten wird eine zuverlässige Verbindung gewährleistet.

In einer bevorzugten Weiterbildung schließt sich die Anlagefläche unmittelbar am Schraubenkopf der Fixierschraube an, wobei sich an die Anlagefläche ein zylindrischer Schaft anschließt. Dieser zylindrische Schaft kann so lang dimensioniert werden, dass der Schraubenkopf mit der Anlagefläche in einem Teil des Pfosten untergebracht werden kann, in dem eine ausreichende Dicke zur Verfügung steht. Dies kann beispielsweise oberhalb des Achteckes geschehen mit der Folge, dass der Absatz ebenfalls oberhalb des Achteckes angeordnet ist. Dies hat den Vorteil, dass der hohle Pfosten in seinem Bereich unterhalb des Absatzes einen vergleichsweise geringen Durchmesser aufweist, so dass auch der in den Kiefer einzusetzende Grundkörper entsprechend klein ausgeführt werden kann. Oberhalb des Absatzes, also in einem Bereich, in dem der Pfosten nicht in den Kiefer eingesetzt wird, kann der Pfosten etwas breiter ausgeführt werden, unter anderem um den Schraubenkopf hier aufzunehmen.

Dabei hat es sich als vorteilhaft erwiesen, den Absatz und korrespondierend hierzu die Anlagefläche zwischen 40° und 80°, vorzugsweise 60°gegenüber der Längsachse des Dentalimplantates zu neigen. Hierdurch wird eine ausreichend große Fläche in axialer Richtung zur Verfügung gestellt, so dass die Fixierschraube ihre Kraft gut in den Pfosten ableiten kann und gleichzeitig wird noch ein ausreichender Winkel bereitgestellt, damit sich die Fixierschraube gut in den Pfosten hineinziehen kann, um eine ausreichend große Kontaktfläche zu einer zuverlässigen und dauerhaften Fixierung des Pfosten zu erhalten.

In einer anderen, bevorzugten Ausführungsform ist am Pfosten eine radiale Schulter ausgebildet, die an einer Stirnseite des Grundkörpers zur Anlage kommt. Dabei ist der Außendurchmesser der Schulter im Wesentlichen gleich dem Außendurchmesser der Stirnseite des Grundkörpers. Dies hat den Vorteil, dass die Außenseite des Dentalimplantates sehr gleichmäßig ausgebildet ist und keine Angriffsflächen oder Nischen zur Anhäufung von Bakterien oder totem Gewebe liefert.

In einer bevorzugten Weiterbildung vergrößert sich der Durchmesser des Pfosten ausgehend von der Schulter bis hin zu einem Vorsprung. An diesem Vorsprung kommt dann der spätere Zahnersatz zur Anlage. Dies hat den Vorteil, dass sich hier eine gleichmäßige Querschnittserweiterung ergibt, die dann sanft und ohne Nischen und Vorsprünge zu produzieren, in den eigentlichen Zahnersatz übergeht.

In einer anderen, bevorzugten Weiterbildung verjüngt sich der Pfosten oberhalb des Vorsprunges, um dem späteren Zahnersatz hier einen guten Halt zu geben.

In einer weiteren, bevorzugten Ausführungsform ist am Pfosten im Bereich zwischen der Schulter und dem Achteck ein Konus ausgebildet und in einer vorteilhaften Weiterbildung ist korrespondierend zum Konus an der Sacklochöffnung des Grundkörpers eine entsprechende Phase vorgesehen. Insbesondere durch den Konus am Pfosten wird der durch die Phase entstehende Hohlraum verschlossen, so dass die Schulter über den Konus passgenau und bündig an der Phase bzw. der Stirnseite des Grundkörpers anliegt. Dies hat den Vorteil, dass sich auch hier keinerlei Bakterien oder Gewebereste ablagern können, die zu Infektionen oder anderen Komplikationen führen könnten.

Weitere Vorteile des erfindungsgemäßen Dentalimplantates ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine perspektivische Explosionsdarstellung eines erfindungsgemäße Dentalimplantates;
- Fig. 2: eine geschnitten dargestellte Seitenansicht eines Grundkörpers des Dentalimplantates gemäß Fig. 1;
- Fig. 3: eine Seitenansicht einer Fixierschraube des Dentalimplantates gemäß Fig. 1;
- Fig. 3a: eine Schnittansicht der Fixierschraube gemäß Fig. 3;
- Fig. 4: eine Seitenansicht eines Pfostens des Dentalimplantates gemäß Fig. 1;
- Fig. 4a: eine Seitenansicht des Pfostens gemäß Fig. 4, um 90° gedreht;
- Fig. 4b: eine Schnittansicht des Pfostens gemäß Fig. 4;
- Fig. 5: eine geschnitten dargestellte Explosionsdarstellung des Dentalimplantates gemäß Fig. 1;
- Fig. 6: das Dentalimplantat gemäß Fig. 1 im zusammengebauten Zustand.

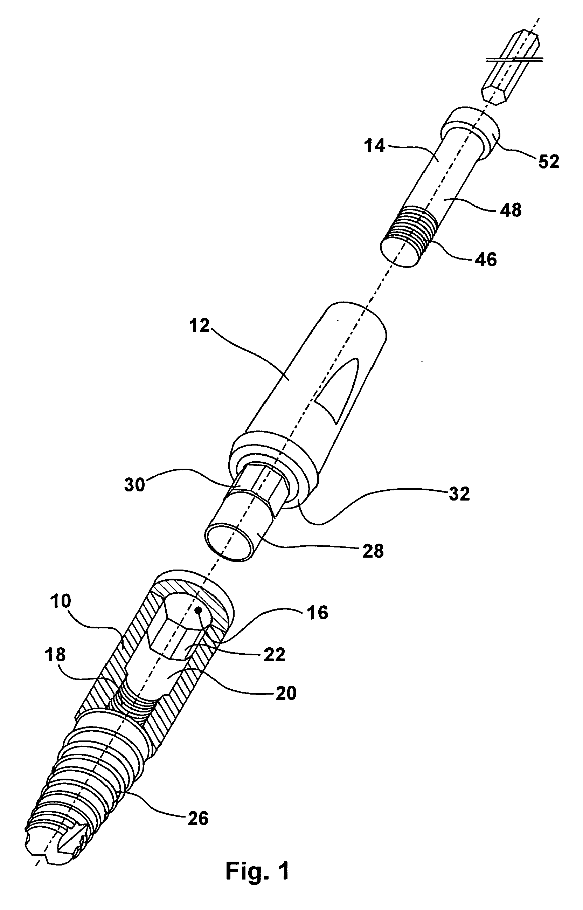

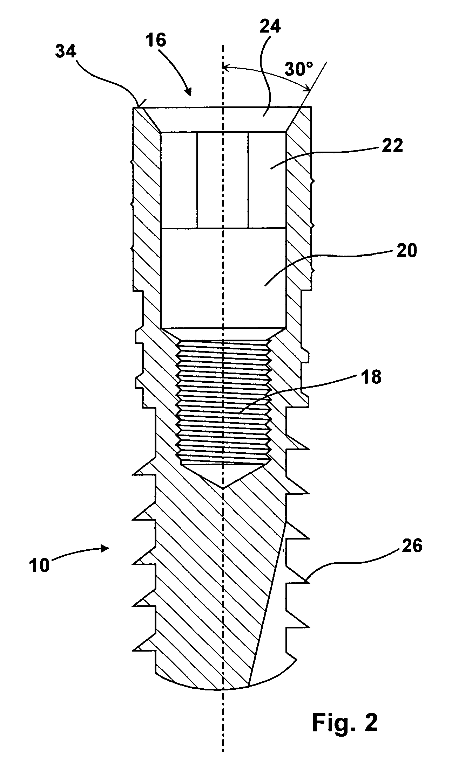

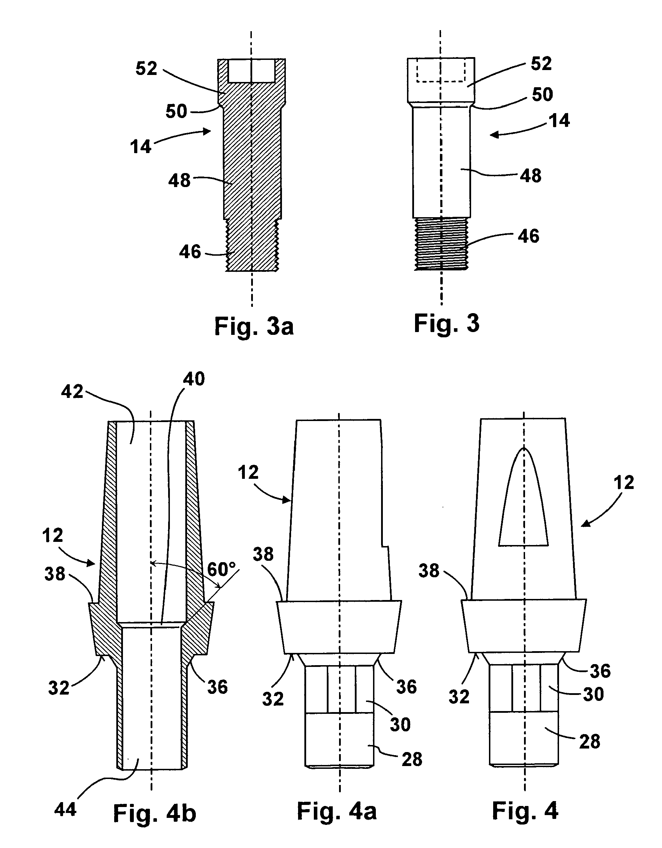

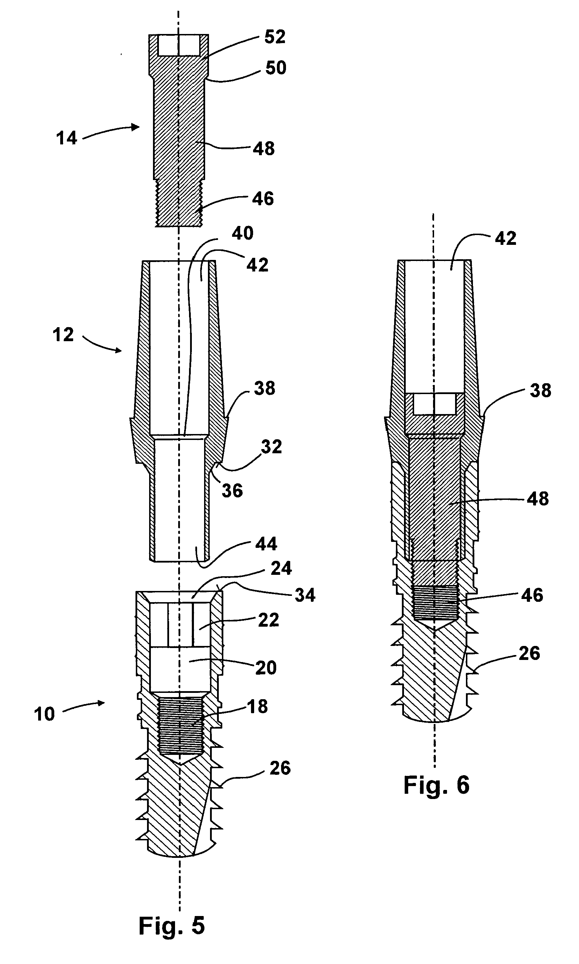

In den Fig. 1 bis 6 ist ein erfindungsgemäßes Dentalimplantat dargestellt. Dieses Dentalimplantat umfasst einen Grundkörper 10 zum Einschrauben in ein menschlichen Kiefer, einen Pfosten 12 zur Aufnahme eines Zahnersatzes und eine Fixierschraube 15 zur Befestigung des Pfostens 12 am Grundkörper 10.

Der Grundkörper 10 weist um seine Längsachse herum eine Sacklochöffnung 16 auf, die in ihrem unteren Bereich ein Innengewinde 18 besitzt. Oberhalb des Innengewindes 18 ist in der Sacklochöffnung 16 eine Pfostenaufnahme ausgebildet, die sich aus einem unteren, zylindrischen Abschnitt 20 und einen oberen, im Querschnitt achteckigen Abschnitt 22 zusammensetzt. Oberhalb des achteckigen Abschnittes 22 ist eine Phase 24 ausgebildet, wobei die Phase 24 gegenüber der Längsachse des Grundkörpers 10 um einen Winkel von 30° geneigt ist. An der Außenseite des Grundkörpers 10 ist ein Außengewinde 26 ausgebildet, mit dem der Grundkörper in den Kiefer eingeschraubt werden kann.

Korrespondierend zu der Pfostenaufnahme am Grundkörper 10 ist am Pfosten 12 ein Einsatz ausgebildet, welcher sich aus einem Zylinder 28 und einem Achteck 30 zusammensetzt. Dabei ist der Zylinder 28 etwas länger ausgeführt, als das Achteck 30. Der Durchmesser des Zylinders 28 entspricht dabei der minimalen lichten Weite des Achteckes 30, so dass der Zylinder 28 durch den achteckigen Abschnitt 22 im Grundkörper 10 hindurchgeführt werden kann, um in den zylindrischen Abschnitt 20 des Grundkörpers 10 zu gelangen.

Am Pfosten 12 ist eine radiale Schulter 32 ausgebildet, welche an einer Stirnseite 34 des Grundkörpers 10 zur Anlage kommt. Dabei ist der Außendurchmesser der Schulter 32 identisch mit dem Außendurchmesser der Stirnseite 34, so dass sich der Pfosten 12 bündig an den Grundkörper 10 anschließt. Zwischen der Schulter 32 und dem Achteck 30 ist ein Konus 36, der korrespondierend zur Phase 24 ebenfalls in einem Winkel von 30° zur Längsachse des Dentalimplantates geneigt ist.

Von der Schulter 32 ausgehend, verbreitet sich der Pfosten 12 konisch bis zu einem Vorsprung 38. Hier springt der Durchmesser des Pfostens 12 deutlich zurück und verjüngt sich fortan konisch, so dass der zu erwartende Zahnersatz in einfacher Weise auf den Pfosten 12 aufgesetzt werden kann und am Vorsprung 38 zur Anlage kommt. Der Pfosten 12 ist hohl ausgeführt und besitzt in dem Bereich zwischen der Schulter 32 und dem Vorsprung 38 einen Absatz 40. Oberhalb des Absatzes 40 ist im Pfosten 12 ein erster zylindrischer Abschnitt 42 ausgebildet, der einen größeren Durchmesser aufweist, als ein zweiter zylindrischer Absatz 44 unterhalb des Absatzes 40. Dieser Absatz 40 ist konisch ausgebildet mit einem Winkel 60° zur Längsachse des Dentalimplantates.

Die Fixierschraube 14 ist in ihrem unteren Bereich mit einem Gewinde 46 ausgestattet und besitzt einen zylindrischen Schaft 48, an dem sich eine Anlagefläche 50 und ein Schraubenkopf 52 anschließt. Dabei ist der Durchmesser des Schaftes 48 kleiner als der Außendurchmesser des Gewindes 46, während der Durchmesser des Schraubenkopfes 52 wiederum größer als der Außendurchmesser des Gewindes 46 ist.

Im montierten Zustand reicht der Zylinder 28 des Pfostens in den zylindrischen Abschnitt 20 des Grundkörpers 10, und das Achteck 30 des Pfostens 12 sitzt im achteckigen Dreieck des Grundkörpers 10. Dabei liegt die Schulter 32 des Pfosten 12 an der Stirnseite 34 des Grundkörpers 10 an, und der Konus 36 des Pfosten 12 liegt an der Phase 24 des Grundkörpers 10 an. Somit sitzt der Pfosten 12 passgenau und bündig auf dem Grundkörper 10. Aufgrund der Passgenauigkeit der beiden Bauteile wird erreicht, dass keine Spalten entstehen, in denen sich Bakterien oder andere Erreger ansammeln können.

Durch den hohlen Pfosten 12 wird dann die Fixierschraube 14 hindurchgesteckt, so dass die Fixierschraube 14 mit ihrem Gewinde in das Innengewinde 18 der Sacklochöffnung 16 Grundkörpers 10 einschraubbar ist. In vollständig angezogenem Zustand der Fixierschraube 14 liegt der Schraubenkopf 52 mit seiner Anlagefläche 50 fest auf dem Absatz 40 des Pfostens 12 auf, so dass die von der Fixierschraube 14 ausgehenden Haltekräfte zuverlässig und gleichmäßig in den Pfosten 12 eingeleitet werden können. Gleichzeitig bewirkt die Konizität des Absatzes 40 und der Anlagefläche 50, dass sich die Fixierschraube 14 fest in den Pfosten 12 hineinzieht, um diesen zuverlässig zu fixieren. Dabei ist der zylindrische Schaft 48 so dimensioniert, dass der Schraubenkopf 52 oberhalb der Schulter 32 im Pfosten 12 verbleibt, denn nur hier steht ein ausreichender Durchmesser des Pfostens 12 zur Verfügung.

In einer anderen, hier nicht dargestellten Ausführungsform ist der Pfosten 12 zwischen dem Zylinder 28 und dem Konus 36 statt mit einem Achteck 30 mit einem Sechs-, einem Zehn- oder Zwölfeck versehen. Es versteht sich, dass im Grundkörper 10 statt dem achteckigen Abschnitt 22 ein zum Pfosten korrespondierender sechs-, zehn- oder zwölfeckiger Abschnitt vorgesehen ist.

### Bezugszeichenliste:

- 10: Grundkörper
- 12: Pfosten
- 14: Fixierschraube
- 16: Sacklochöffnung
- 18: Innengewinde
- 20: zylindrischer Abschnitt
- 22: achteckiger Abschnitt
- 24: Phase
- 26: Außenbereich
- 28: Zylinder
- 30: Achteck
- 32: Schulter
- 34: Stirnseite
- 36: Konus
- 38: Vorsprung
- 40: Absatz
- 42: zylindrischer Abschnitt
- 44: zylindrischer Abschnitt
- 46: Gewinde
- 48: zylindrischer Schaft
- 50: Anlagefläche
- 52: Schraubenkopf

## Patentansprüche

1. In einen menschlichen Kiefer einschraubbares Dentalimplantat zur Aufnahme und zur Fixierung eines Zahnersatzes, umfassend einen Grundkörper (10) mit einem Außengewinde (26) zur Verankerung des Grundkörpers (10) im Kiefer, einen Pfosten (12) zur Aufnahme des Zahnersatzes und eine Fixierschraube (14) zur Befestigung des Pfostens (12) am Grundkörper (10), wobei im Grundkörper (10) eine axiale Sacklochöffnung (16) vorgesehen ist, die in ihrem unteren Bereich ein Innengewinde (18) und in ihrem oberen Bereich eine Pfostenaufnahme aufweist, wobei am Pfosten (12) ein zur Pfostenaufnahme passgenau kompatibler Einsatz ausgebildet ist und wobei der Pfosten (12) hohl ausgeführt ist, so dass die Fixierschraube (14) durch den Pfosten (12) hindurchführbar ist und in das Innengewinde (18) der Sacklochöffnung (16) einschraubbar ist, um den Pfosten (12) am Grundkörper (10) zu fixieren,
**dadurch gekennzeichnet,**
**dass** die Pfostenaufnahme einen unteren, zylindrischen Abschnitt (20) und einen oberen, im Querschnitt achteckigen Abschnitt (22) aufweist, und dass der am Pfosten (12) ausgebildete Einsatz dazu passgenau kompatibel als Zylinder (28) und als Achteck (30) ausgebildet ist.

2. Dentalimplantat nach Anspruch 1,
**dadurch gekennzeichnet,**
**dass** der Außendurchmesser des Zylinders (28) kleiner oder gleich dem kleinsten Außendurchmessers des Achteckes (30) ausgebildet ist.

3. Dentalimplantat nach einem der vorangehenden Ansprüche,
**dadurch gekennzeichnet,**
**dass** im Inneren des Pfostens (12) ein umlaufender, konisch ausgebildeter Absatz (40) ausgebildet ist, an dem die Fixierschraube (14) im montierten Zustand mit einer korrespondierenden Anlagefläche (50) zur Anlage kommt.

4. Dentalimplantat nach Anspruch 3,
**dadurch gekennzeichnet,**
**dass** sich die Anlagefläche (50) unmittelbar an einen Schraubenkopf (52) der Fixierschraube (14) anschließt, wobei sich an die Anlagefläche (50) ein zylindrischer Schaft (48) anschließt.

5. Dentalimplantat nach Anspruch 3 oder 4,
**dadurch gekennzeichnet,**
**dass** der Absatz (40), und korrespondierend hierzu die Anlagefläche (50), zwischen 40° und 80°, vorzugsweise 60°, gegenüber der Längsachse des Dentalimplantates geneigt ist.

6. Dentalimplantat nach einem der vorangehenden Ansprüche,
**dadurch gekennzeichnet,**
**dass** am Pfosten (12) eine radiale Schulter (32) ausgebildet ist, mit der der Pfosten (12) an einer Stirnseite (34) des Grundkörpers (10) zur Anlage kommt, wobei der Außendurchmesser der Schulter (32) im wesentlichen gleich dem Außendurchmesser der Stirnseite (34) des Grundkörpers (10) ist.

7. Dentalimplantat nach Anspruch 6,
**dadurch gekennzeichnet,**
**dass** am Pfosten (12) ein Vorsprung (38) zur Aufnahme des Zahnersatzes ausgebildet ist, wobei sich der Pfosten (12) ausgehend von der Schulter (32) bis hin zum Vorsprung (38) konisch vergrößert.

8. Dentalimplantat nach Anspruch 7,
**dadurch gekennzeichnet,**
**dass** sich der Pfosten (12) vom Vorsprung (38) an konisch verjüngt.

9. Dentalimplantat nach einem der Ansprüche 6 bis 8,
**dadurch gekennzeichnet,**
**dass** am Pfosten (12) zwischen der Schulter (32) und dem Achteck (30) ein Konus (36) ausgebildet ist.

10. Dentalimplantat nach Anspruch 9,
**dadurch gekennzeichnet,**
**dass** an der Sacklochöffnung (16) des Grundkörpers (10) korrespondierend zum Konus (36) eine Phase (24) ausgebildet ist.
